# EUROPEAN PATENT APPLICATION

(11) **EP 3 203 410 A1**
(43) Date of publication of application: **09.08.2017**
(21) Application number: 14903214.6
(22) Date of filing: 31.12.2014
(51) Int. Cl.: G06K 9/00, G06K 9/46, G06K 9/20

(54) **FINGERPRINT IDENTIFICATION SYSTEM, AND FINGERPRINT PROCESSING METHOD THEREFOR AND FINGERPRINT PROCESSING APPARATUS THEREOF**

(30) Priority: 30.09.2014 CN 201410526126
(71) Applicant: Shenzhen Huiding Technology Co., Ltd., Shenzhen, Guangdong 518000 (CN)
(72) Inventor: PI, Bo, Shenzhen Guangdong 518000 (CN); YANG, Meng-Ta, Shenzhen Guangdong 518000 (CN)
(74) Representative: Stuttard, Garry Philip
(86) International application number: PCT/CN2014/096069
(87) International publication number: WO 2016/049995

(57) **Abstract**

A fingerprint identification system, a fingerprint processing method, and a fingerprint processing apparatus are provided in embodiments of the present invention, which pertains to the filed of the fingerprint identification technologies. The method includes: acquiring, in a registration mode, multiple pictures obtained via fingerprint scanning by a designated zone in a scanning area of a sensor when a finger of a user swipes through the designated zone; stitching the multiple pictures to form a fingerprint image according to feature values which are same in multiple pictures; and storing the fingerprint image or feature values of the fingerprint image into a registration template. According to the present invention, scanning time may be reduced and operations are simple, and accordingly efficiency of the fingerprint registration is improved.

## Description

### TECHNICAL FIELD

The present invention relates to the field of the fingerprint identification technologies, and in particular, to a fingerprint identification system, and a fingerprint processing method and apparatus thereof.

### BACKGROUND

With the advancement of the security technologies, fingerprint identification gains more and more attractions among people, and is more and more widely used in various fields. A fingerprint identification system requires fingerprints be registered therein. In the related art, press-based fingerprint registration is generally used, such as fingerprint registration of fingerprint unlocking (Apple touch ID) of Apple products. According to this registration method, a user needs to touch a sensor many times to acquire multiple pictures for stitching, and the stitched pictures are used as a template for fingerprint authentication. According to this registration method, a user needs to touch a sensor many times and be guided during this process, such that the sensor is capable of sensing different fingerprint parts. As a result, registration time is too long.

### SUMMARY

In view of the above, the technical problem to be solved in the present invention is to provide a fingerprint identification system, a fingerprint processing method and a fingerprint processing apparatus to solve the problem, in a fingerprint identification and registration method in the related art, that registration time is too long because a user needs to touch a sensor many times and be guided during this process.

The technical solution disclosed in the present invention to address the technical problem is implemented as follows:

One aspect of the present invention provides a fingerprint processing method of a fingerprint identification system. The method includes the following steps: acquiring, in a registration mode, multiple pictures obtained via fingerprint scanning by a designated zone in a scanning area of a sensor when a finger of a user swipes through the designated zone; stitching the multiple pictures to form a fingerprint image according to feature values which are same in multiple pictures; and storing the fingerprint image or feature values of the fingerprint image into a registration template.

In the fingerprint processing method as described above, the feature value comprises a description of a corresponding feature point and a location of the feature point; or the feature value comprises an orientation or statistical features of a pattern in a vicinity of a feature point.

In the fingerprint processing method as described above, the stitching the multiple pictures to form a fingerprint image according to feature values which are same in the multiple pictures comprises: extracting feature values of multiple feature points in each of the multiple pictures; searching for feature points having the same feature values in the multiple pictures according to the extracted feature values; and stitching the multiple pictures according to locations of the feature points having the same feature values, wherein the feature points having the same feature values coincide with each other upon stitching of the multiple pictures.

In the fingerprint processing method as described above, the designated zone is located at a center of the scanning area.

In the fingerprint processing method as described above, the method further includes: acquiring, in an authentication mode, a fingerprint authentication picture obtained via fingerprint scanning by an entire scanning area of the sensor when the finger of the user touches or presses the sensor; extracting feature values of the fingerprint authentication picture; performing a similarity comparison between the feature values of the fingerprint authentication picture and the feature values stored in the registration template; and determining, if the similarity exceeds a preset threshold, that an identification authentication is successful; otherwise, determining that the identification authentication fails.

Another aspect of the present invention provides a fingerprint processing apparatus of a fingerprint identification system. The apparatus includes: an acquiring unit, configured to acquire, in a registration mode, multiple pictures obtained via fingerprint scanning by a designated zone in a scanning area of a sensor when a finger of a user swipes through the designated zone; a processing unit, configured to stitch the multiple pictures to form a fingerprint image according to feature values which are same in the multiple pictures acquired by the acquiring unit; and a storing unit, configured to store the fingerprint image or feature values of the fingerprint image into a registration template.

In the fingerprint processing apparatus as described above, the processing unit includes: a feature extracting module, configured to extract feature values of multiple feature points in each of the multiple pictures acquired by the acquiring unit; and an analyzing module, configured to search for feature points having the same feature values in the multiple pictures according to the feature values extracted by the feature extracting module; and a stitching module, configured to stitch, based on analysis of the analyzing module, the multiple pictures according to locations of the feature points having the same feature values, wherein the feature points having the same feature values coincide with each other upon stitching of the multiple pictures.

In the fingerprint processing apparatus as described above, the acquiring unit is further configured to acquire, in an authentication mode, a fingerprint authentication picture obtained via fingerprint scanning by an entire scanning area of the sensor when the finger of the user touches or presses the sensor; the processing unit is further configured to extract feature values of the fingerprint authentication picture, perform a similarity comparison between the feature values of the fingerprint authentication picture and the feature values stored in the registration template, and determine, if a similarity exceeds a preset threshold, that an identification authentication is successful; otherwise, determine that the identification authentication fails.

Another aspect of the present invention provides a fingerprint identification system. The system includes a fingerprint processing apparatus as described above and a sensor. The sensor is configured to the sensor is configured to scan, in a registration mode, a fingerprint of a finger swiping through a designated zone in a scanning area, to enable the fingerprint processing apparatus to acquire multiple pictures; or scan, in an authentication mode, the fingerprint of the finger in an entire scanning area, to enable the fingerprint processing apparatus to acquire the fingerprint authentication picture.

In the fingerprint identification system as described above, the designated zone of the sensor is located at the center of the scanning area.

With the fingerprint identification system, and the fingerprint processing method and apparatus thereof according to the present invention, a registration template is registered by using a swiping manner, such that the user only needs to swipe the finger through the designated zone in the scanning area of the sensor to complete registration. During the process of the registration, only a small portion zone, that is, the designated zone, in the scanning area of the sensor is used to perform fingerprint scanning, the multiple pictures obtained in the process of scanning are stitched to form the fingerprint image for registration, and the fingerprint image is stored in the registration template, therefore, scanning time is further reduced and operations are simple, and accordingly the efficiency of the fingerprint registration is improved.

### BRIEF DESCRIPTION OF THE DRAWINGS

FIG. 1 is a schematic diagram of a fingerprint identification system according to an embodiment of the present invention;
FIG. 2-a is a schematic diagram of division of a designated zone of a sensor in FIG. 1 in a registration mode;

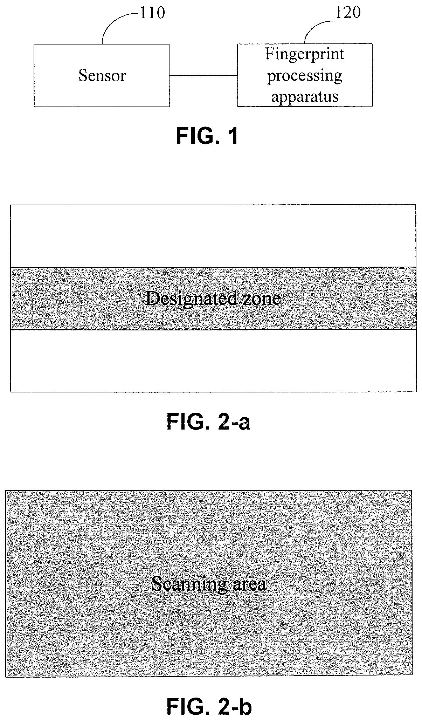

FIG. 2-b is a schematic diagram of a scanning area of the sensor in FIG. 1 in an identification authentication mode;

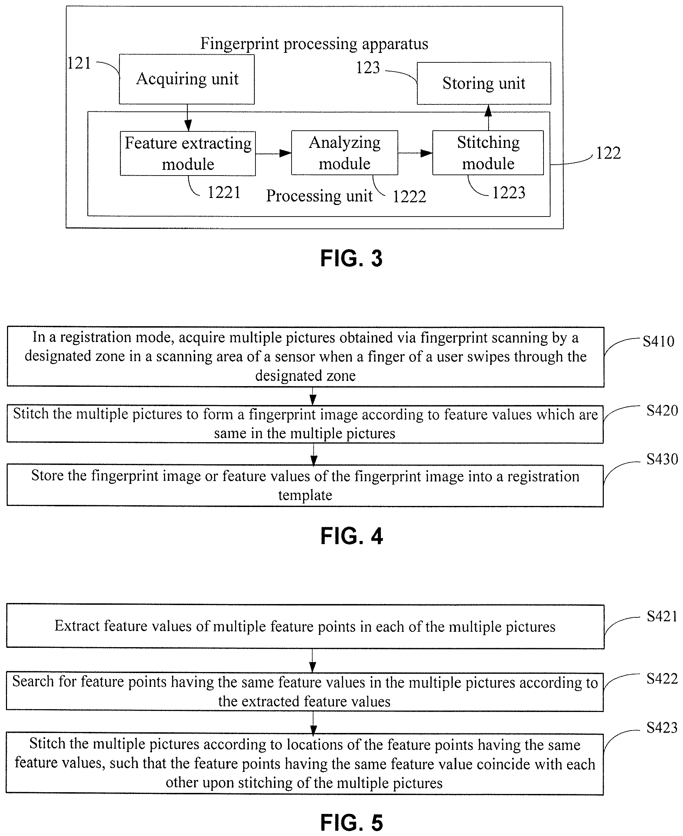

FIG. 3 is a schematic structural diagram of modules of a fingerprint processing apparatus in FIG. 1;
FIG. 4 is a flowchart of a fingerprint processing method of a fingerprint identification system in a registration mode according to an embodiment of the present invention;
FIG. 5 is a flowchart of step S420 in FIG. 4;

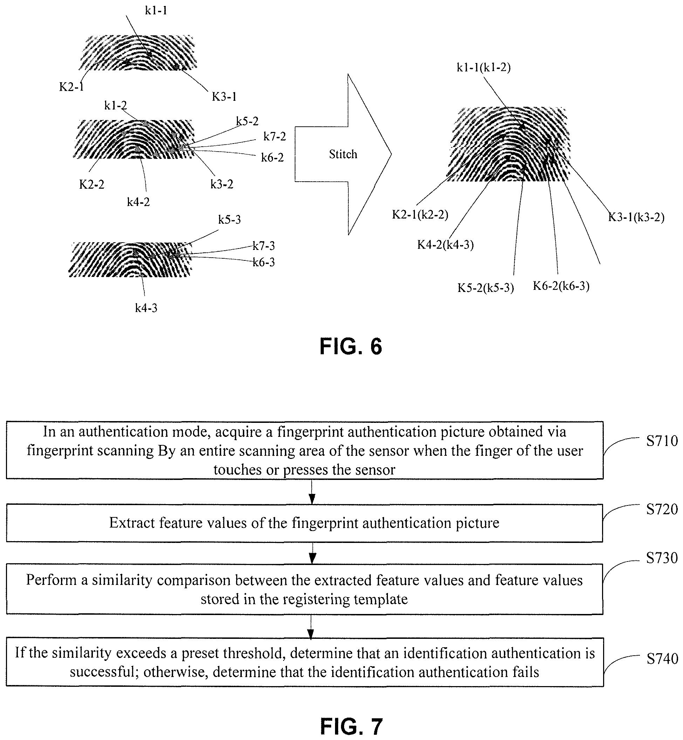

FIG. 6 is a schematic diagram of a picture stitch in step S420 in FIG. 4; and
FIG. 7 is a flowchart of a fingerprint processing method of a fingerprint identification system in an authentication mode according to an embodiment of the present invention.

### DETAILED DESCRIPTION

To make the technical problem to be solved, technical solutions, and advantages of the present invention clearer and more understandable, the present invention is further described in detail with reference to the accompanying drawings and specific embodiments. It should be understood that the embodiments described here are only exemplary ones for illustrating the present invention, and are not intended to limit the present invention.

An embodiment of the present invention provides a fingerprint identification system. Referring to FIG. 1, the system includes a sensor 110 and a fingerprint processing apparatus 120.

The sensor 110 is configured to scan, in a registration mode, a fingerprint of a finger swiping through a designated zone in a scanning area, to enable the fingerprint processing apparatus 120 to acquire multiple pictures; or scan, in an authentication mode, a fingerprint of a finger in an entire scanning area when the finger of a user touches or presses the sensor, to enable the fingerprint processing apparatus 120 to acquire a fingerprint authentication picture.

FIG. 2-a is a schematic diagram of zone division of the sensor 120 in a registration mode. Assuming that the entire scanning area of the sensor in this embodiment includes 128 x 64 pixels, in the registration mode, the designated zone (illustrated as shadow portion in FIG. 2-a, which is specifically located at a center of the scanning area) is scanned. For example, the pixels in the contrail three rows in the entire scanning zone of the sensor 120 are configured as the designated zone and are scanned.

In practice, when the user needs to enable the finger to swipe through the designated zone, the sensor 120 scans the fingerprint of the finger swiping through the designated zone, and obtains multiple pictures according to presetting.

FIG. 2-b is a schematic diagram of a scanning area of the sensor 120 in an identification authentication mode. In the identification authentication mode, all the pixels in the entire scanning area of the sensor are scanned, such that a piece of fingerprint authentication picture including 128 x 64 pixels is acquired.

Referring to FIG. 3, the fingerprint processing apparatus 120 includes an acquiring unit 121, a processing unit 122, and a storing unit 123.

The acquiring unit 121 is configured to: acquire, in the registration mode, multiple pictures obtained via fingerprint scanning performed by the designated zone when the finger of the user swipes through the designated zone in the scanning area of the sensor.

The processing unit 122 is configured to stitch the multiple pictures to form a fingerprint image according to feature values which are same in the multiple pictures acquired by the acquiring unit.

The processing unit 122 includes:
a feature extracting module 1221, configured to extract feature values of multiple feature points in each of the pictures acquired by the acquiring unit 121; and
an analyzing module 1222, configured to search for feature points having the same feature values in the pictures according to the feature values extracted by the feature extracting module 1221; and
a stitching module 1223, configured to stitch, based on analysis of the analyzing module 1222, the multiple pictures according to locations of the feature points having the same feature values, such that the feature points having the same feature values coincide with each other upon stitching of the multiple pictures.

The storing unit 123 is configured to store the fingerprint image or feature values of the fingerprint image into a registration template.

In an authentication mode, the acquiring unit 121 is further configured to acquire a fingerprint authentication picture obtained via fingerprint scanning by the entire scanning area of the sensor when the finger of the user statically touches or presses the sensor.

The processing unit 122 is further configured to extract a feature value of the fingerprint authentication picture acquired by the acquiring unit 121, perform a similarity comparison between the feature value and the stored feature values in the registration template, and determine that an identification authentication is successful if the similarity exceeds a preset threshold, and otherwise, determine that the identification authentication fails.

With the fingerprint identification system according to this embodiment, a template is registered by using a swiping manner, such that the user only needs to swipe the finger through the designated zone in the scanning area of the sensor to complete registration. During the process of the registration, only a small portion zone, that is, the designated zone, in the scanning area of the sensor is used to perform fingerprint scanning, the multiple pictures obtained in the scanning process are stitched to form the fingerprint image used for registration, and the fingerprint image is stored in the registration template, therefore, scanning time is further reduced, operations are simple, and accordingly the efficiency of the fingerprint registration is improved.

Based on the above system, the present invention further provides a fingerprint processing method of a fingerprint identification system. Referring to FIG. 4, the method includes the following steps.

S410: In a registration mode, multiple pictures, which are obtained via fingerprint scanning by a designated zone of a scanning area of a sensor, are acquired when a finger of a user swipes through the designated zone.

S420: The multiple pictures are stitched to form a fingerprint image according to feature values which are same in the multiple pictures.

Specifically, referring to FIG. 5, step S420 includes the following sub-steps.

S421: Feature values of multiple feature points in each of the multiple pictures are extracted.

Referring to FIG. 6, three pictures P1, P2, and P3 being acquired in step S410 are taken as an example.

The feature values of feature points k1-1, k2-1 and k3-1 are extracted from the picture P1, the feature values of feature points k1-2, k2-2, k3-2, k4-2, k5-2, k6-2 and k7-2 are extracted from the picture P2, and the feature values of feature points k4-3, k5-3, k6-3 and k7-3 are extracted from the picture P3.

S422: Feature points having the same feature values in the multiple pictures are searched for according to the extracted feature values.

As illustrated in FIG. 6, the feature values of the feature points k1-1, k2-1 and k3-1 of the picture P1 are the same as the feature values of the feature points k1-2, k2-2 and k3-2 of picture P2; and the feature values of the feature points k4-2, k5-2, k6-2 and k7-2 are respectively the same as the feature values of the feature points k4-3, k5-3, k6-3 and k7-3.

S423: The multiple pictures are stitched according to locations of the feature points having the same feature values such that the feature points having the same feature values coincide with each other upon stitching of the multiple pictures.

As illustrated in FIG. 6, the pictures P1, P2, and P3 are stitched according to locations of the same feature points, and upon stitching of the multiple pictures, the feature points k1-1, k2-1 and k3-1 of the picture P1 respectively coincide with the feature points k1-2, k2-2 and k3-2 of the picture P2, and the feature points k4-2, k5-2, k6-2 and k7-2 of the picture P2 respectively coincide with the feature points k4-3, k5-3, k6-3 and k7-3 of the picture P2 .

S430: The fingerprint image or feature values of the fingerprint image are stored into a registration template.

Specifically, the fingerprint image obtained via stitching may be directly stored into the registration template, or only the feature values of the fingerprint image are stored into the registration template. The feature value includes a description of the corresponding feature point and a location of the feature point; or the feature value may also include an orientation or other statistical features of a pattern in a vicinity of the feature point.

Referring to FIG. 7, the method may further include the following steps.

S710: In an authentication mode, the fingerprint authentication picture obtained via fingerprint scanning by an entire scanning area of the sensor is acquired when the finger of the user statically touches or presses the sensor.

S712: Feature values of the fingerprint authentication picture are extracted.

S713: A similarity comparison is performed between the exacted feature values of the fingerprint authentication picture and the feature value stored in the registering template.

S714: If the similarity exceeds a preset threshold, it is determined that an identification authentication is successful; otherwise, it is determined that the identification authentication fails.

With the fingerprint processing method of the fingerprint identification system according to this embodiment, a registration template is registered by using a swiping manner, such that the user only needs to swipe the finger through the designated zone in the scanning area of the sensor to complete registration. During the process of the registration, only a small portion zone, that is, the designated zone, in the scanning area of the sensor is used to perform fingerprint scanning, the multiple pictures obtained in the process of scanning are stitched to form the fingerprint image for registration, and the fingerprint image is stored in the registration template, therefore, scanning time is further reduced and operations are simple, and accordingly the efficiency of the fingerprint registration is improved.

The preferred embodiments of the present invention are described with reference to the accompanying drawings, but the scope of the present invention is not limited to such embodiments. Any modification, equivalent replacement and improvement made by a person skilled in the art without departing from the scope and essence of the present invention shall all fall within the scope defined by the claims of the present invention.

### Industrial Applicability

With the fingerprint identification system, and the fingerprint processing method and apparatus thereof according to the present invention, a template is registered by using the method of swiping, such that the user only needs to swipe the finger through the designated zone in the scanning area of the sensor to complete registration; since during the process of the registration, only the sensor is used to scan a small portion zone, that is, the designated zone, in the scanning area, the multiple pictures grabbed during the process of scanning are stitched to form the fingerprint image used during the registration, and the fingerprint image is stored in the registration template, scanning time is further reduced, operations are simple, and the efficiency of the fingerprint registration is improved.

## Claims

1. A fingerprint processing method of a fingerprint identification system, comprising:
acquiring, in a registration mode, multiple pictures obtained via fingerprint scanning by a designated zone in a scanning area of a sensor when a finger of a user swipes through the designated zone;
stitching the multiple pictures to form a fingerprint image according to feature values which are same in multiple pictures; and
storing the fingerprint image or feature values of the fingerprint image into a registration template.

2. The fingerprint processing method according to claim 1, wherein
the feature value comprises a description of a corresponding feature point and a location of the feature point;
the feature value comprises an orientation or statistical features of a pattern in a vicinity of a feature point.

3. The fingerprint processing method according to claim 1, wherein the stitching the multiple pictures to form a fingerprint image according to feature values which are same in the multiple pictures comprises:
extracting feature values of multiple feature points in each of the multiple pictures;
searching for feature points having the same feature values in the multiple pictures according to the extracted feature values; and
stitching the multiple pictures according to locations of the feature points having the same feature values, wherein the feature points having the same feature values coincide with each other upon stitching of the multiple pictures.

4. The fingerprint processing method according to any one of claims 1 to 3, further comprising:
acquiring, in an authentication mode, a fingerprint authentication picture obtained via fingerprint scanning by an entire scanning area of the sensor when the finger of the user touches or presses the sensor;
extracting feature values of the fingerprint authentication picture;
performing a similarity comparison between the feature values of the fingerprint authentication picture and the feature values stored in the registration template; and
determining, if the similarity exceeds a preset threshold, that an identification authentication is successful; otherwise, determining that the identification authentication fails.

5. The fingerprint processing method according to claim 4, wherein the designated zone is located at a center of the scanning area.

6. A fingerprint processing apparatus of a fingerprint identification system, comprising:
an acquiring unit, configured to acquire, in a registration mode, multiple pictures obtained via fingerprint scanning by a designated zone in a scanning area of a sensor when a finger of a user swipes through the designated zone;
a processing unit, configured to stitch the multiple pictures to form a fingerprint image according to feature values which are same in the multiple pictures acquired by the acquiring unit; and
a storing unit, configured to store the fingerprint image or feature values of the fingerprint image into a registration template.

7. The fingerprint processing apparatus according to claim 6, wherein the processing unit comprises:
a feature extracting module, configured to extract feature values of multiple feature points in each of the multiple pictures acquired by the acquiring unit; and
an analyzing module, configured to search for feature points having the same feature values in the multiple pictures according to the feature values extracted by the feature extracting module; and
a stitching module, configured to stitch, based on analysis of the analyzing module, the multiple pictures according to locations of the feature points having the same feature values, wherein the feature points having the same feature values coincide with each other upon stitching of the multiple pictures.

8. The fingerprint processing apparatus according to claim 6 or 7, wherein:
the acquiring unit is further configured to acquire, in an authentication mode, a fingerprint authentication picture obtained via fingerprint scanning by an entire scanning area of the sensor when the finger of the user touches or presses the sensor;
the processing unit is further configured to extract feature values of the fingerprint authentication picture, perform a similarity comparison between the feature values of the fingerprint authentication picture and the feature values stored in the registration template, and determine, if a similarity exceeds a preset threshold, that an identification authentication is successful; otherwise, determine that the identification authentication fails.

9. A fingerprint identification system, comprising the fingerprint processing apparatus as defined in any one of claims 5 to 8 and a sensor;
the sensor is configured to scan, in a registration mode, a fingerprint of a finger swiping through a designated zone in a scanning area, to enable the fingerprint processing apparatus to acquire multiple pictures; or scan, in an authentication mode, the fingerprint of the finger in an entire scanning area, to enable the fingerprint processing apparatus to acquire the fingerprint authentication picture.

10. The fingerprint identification system according to claim 9, wherein the designated zone of the sensor is located at a center of the scanning area.
